# EUROPEAN PATENT APPLICATION

(11) **EP 2 995 712 A1**
(43) Date of publication of application: **16.03.2016**
(21) Application number: 15168171.5
(22) Date of filing: 19.05.2015
(51) Int. Cl.: D06F 39/10, D06F 39/02, D06F 39/08

(54) **INTEGRATION APPARATUS FOR WATER VALVE FOR A WASHING MACHINE AND METHOD OF MANUFACTURING THE SAME**

(30) Priority: 12.09.2014 KR 20140120989
(71) Applicant: Dongbu Daewoo Electronics Corporation, Seoul 135-523 (KR)
(72) Inventor: LEE, Sung Myun, 135-523 Seoul (KR)
(74) Representative: Rau, Schneck & Hübner Patentanwälte Rechtsanwälte PartGmbB

(57) **Abstract**

An integration apparatus for a water valve (10) for a washing machine includes: a depressurizing valve unit (100) installed in a valve head (11) and operable for maintaining a hydraulic pressure of feed water to less than a preset hydraulic pressure limit; and a filter unit (200) disposed in front of the depressurizing valve unit toward the direction of incoming feed water.

## Description

### Related Application

This application is based on and claims priority to Korean Patent Application No. 10-2014-0120989, filed on September 12, 2014, the disclosure of which is incorporated herein in its entirety by reference.

### Field

Embodiments according to the present invention relate to an integration apparatus for a water valve that provides a depressurizing function and a filter function to reduce the hydraulic pressure of feed water to a preset hydraulic pressure and to filter foreign material in the feed water of a washing machine, and a method of manufacturing such an integration apparatus.

### Background

In general, a washing machine is a device that removes various contaminants from laundry such as clothes, bedding, and the like using the emulsion actions of detergents, the frictional actions of water caused by movement of a pulsator, and the actions of impacts applied to the laundry by the pulsator. In recent years, washing machines that automatically carry out a series of operations, from the start of washing through washing, rinsing, and dehydrating (e.g., spin drying), without any intervention by an operator, are widely used.

A washing machine may include a main body having a bottom and lateral sides and a top cover provided on the upper side of the main body. The main body may be provided with a reservoir in which a washing tub may be rotatably installed to accommodate, wash, and dehydrate the laundry. The washing tub may be provided with a pulsator.

A detergent container housing into which a detergent container may be detachably inserted, a water hose connected to the detergent container housing, and a water valve connected to the water hose may be installed at the rear side of the top cover.

A valve head at a water supply side of the water valve may be installed with a filter, to filter foreign material that might be contained in the water supplied to the washing machine.

At the rear side of the filter, a depressurizing cap may be installed to reduce hydraulic pressure of the feed water to a preset hydraulic pressure such that the feed water may be fed into the washing machine at less than the preset hydraulic pressure. The hydraulic pressure of the feed water may be different in different homes, and so the feed water is fed into the washing machine through the depressurizing valve to reduce hydraulic pressure to the preset level or less, to prevent deterioration of the washing function and damage to the washing machine that might occur if feed water with hydraulic pressure higher than the preset hydraulic pressure was fed into the washing machine.

In a conventional washing machine, a filter and a depressurizing cap are installed as separate parts in the water valve for the washing machine. Thus, and because of their small size, the depressurizing cap or the filter are often lost when a user separates the filter or the depressurizing cap from the water valve for the purpose of cleaning or replacement.

Moreover, because the conventional filter and depressurizing cap are manufactured as separate products, the manufacturing process is complicated and manufacturing costs are increased.

In addition, to install a conventional depressurizing valve and water valve, the depressurizing valve is installed first and the filter is installed in front of the depressurizing valve. Thus, and also because the filter and the depressurizing valve are small, their installation is inconvenient, and productivity is reduced because of the two-part installation process.

### Summary

In view of the above, embodiments according to the present invention provide an integration apparatus for a water valve for a washing machine that performs both a depressurizing function and a filtering function, and a method of manufacturing the same. Consequently, production cost is reduced, installation is easily carried out, and it is hard to lose parts.

According to an aspect of the present disclosure, an integration apparatus for a water valve for a washing machine includes: a depressurizing valve unit installed in a valve head of the water valve that can maintain the hydraulic pressure of feed water to not more than a preset hydraulic pressure limit; and a filter unit disposed in front of the depressurizing valve unit (toward the direction of the incoming feed water).

In an embodiment, the filter unit is integrated with the depressurizing valve unit.

In an embodiment, the filter unit is coupled to the depressurizing valve unit by means of a coupling unit.

The coupling unit may include: a locking element formed on either the depressurizing valve unit or the filter unit; and a locking protrusion formed on the other of the depressurizing valve unit and the filter unit and held in place by the locking element to provide a coupling force between the locking element and the locking protrusion.

The filter unit may include: a flange unit inserted into the valve head and held in place by an end of the depressurizing valve unit; and a mesh unit protruding toward the incoming feed water.

The integration apparatus may further include at least two supports on the outer circumference of the mesh unit and connected to the flange unit, and spaced apart from each other in the circumferential direction by a preset distance.

The mesh unit may be made of synthetic resin and integrated with the flange unit.

The mesh unit may be made of metal and insert-molded into the flange unit.

According to another aspect of the present invention, a method of manufacturing an integration apparatus for a water valve for a washing machine includes: manufacturing a depressurizing valve unit that can maintain the hydraulic pressure of the feed water being fed into the water valve to not more than a preset hydraulic pressure limit; manufacturing a filter unit that can filter foreign material in the feed water; and positioning the filter unit in front of the depressurizing valve unit (toward the incoming feed water), and coupling the depressurizing valve unit and the filter unit to each other.

Manufacturing a depressurizing valve unit may include: forming a housing in which through-holes are formed through which the feed water flows, where a support protrudes from the center of the housing; forming a valve unit operable for closing the through-holes as occasion demands (e.g., if the hydraulic pressure limit is exceeded); and installing the valve unit around the support of the housing.

Manufacturing a filter unit may include: integrally molding a flange unit with dimensions that allow it to be inserted into the water valve and held in place by an end of the depressurizing valve unit with the mesh unit protruding toward the front side of the flange unit.

The method may further include forming at least two supports on the outer circumference of the mesh unit and that are spaced apart from each other by a preset distance in the circumferential direction and that are connected to the flange unit.

According to the present invention, because a depressurizing function and a filtering function are integrally performed by a single part (the integration apparatus), that part is easier to manufacture and its production cost is reduced. Furthermore, it is easier to install the integration apparatus into a washing machine, and it is hard to lose the apparatus or any of its parts.

### Brief Description of the Drawings

The above and other objects and features of the present invention will become apparent from the following description of the embodiments provided in conjunction with the accompanying drawings, in which:
FIG. 1 is an exploded perspective view illustrating a water valve for a washing machine and an integration apparatus for the water valve in an embodiment according to the present invention;
FIG. 2 is a cross-sectional view illustrating an integration apparatus for a water valve for a washing machine in an embodiment according to the present invention;
FIG. 3 is a cross-sectional view illustrating installation of an integration apparatus for a water valve for a washing machine in an embodiment according to the present invention; and
FIG. 4 is a flowchart of a method of manufacturing an integration apparatus for a water valve for a washing machine in an embodiment according to the present invention.

### Detailed Description

Reference will now be made in detail to the various embodiments of the present disclosure, examples of which are illustrated in the accompanying drawings. While described in conjunction with these embodiments, it will be understood that they are not intended to limit the disclosure to these embodiments. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The detailed description of the invention will be provided for the purpose of explaining the principles of the invention and its practical application, thereby enabling others skilled in the art to understand the invention for various embodiments and with various modifications as are suited to the particular use contemplated. The detailed description is not intended to be exhaustive or to limit the invention to the precise embodiments disclosed. Modifications and equivalents will be apparent to practitioners skilled in this art and are encompassed within the spirit and scope of the appended claims.

The terms used in the following description are not intended to limit the present invention, but, are merely used to describe example embodiment(s) according to the invention. It is to be understood that the singular forms of words include plural referents unless the context clearly dictates otherwise.

Hereinafter, an integration apparatus for a water valve for a washing machine in an embodiment according to the present invention will be described with reference to the accompanying drawings.

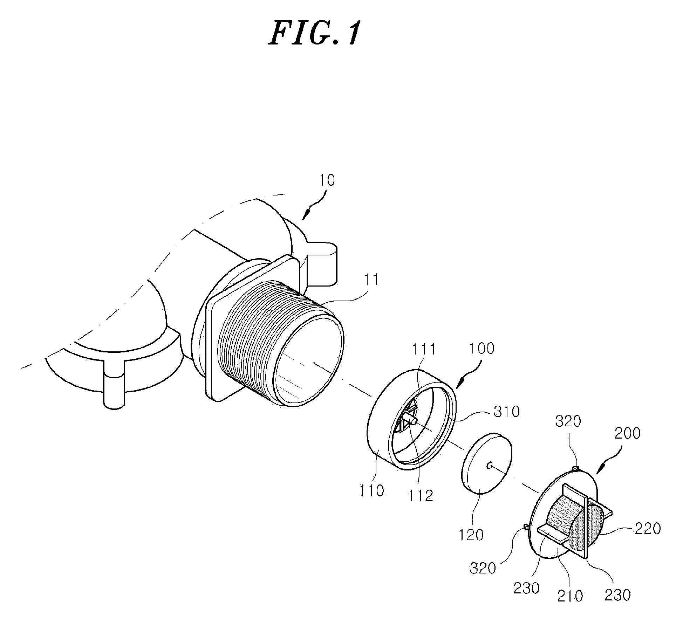

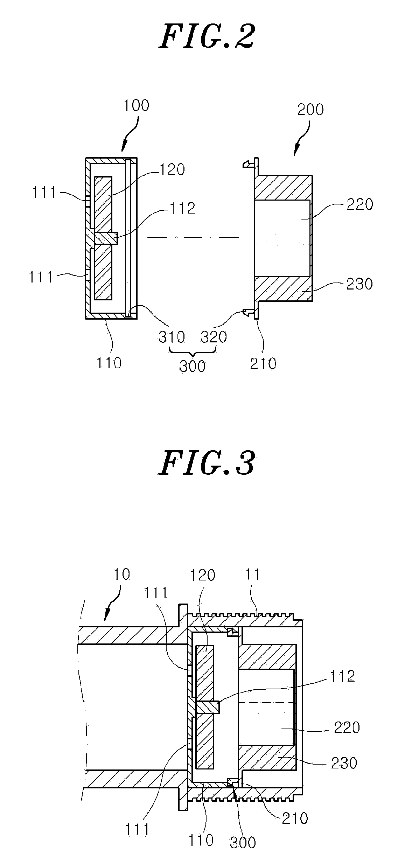

FIG. 1 is an exploded perspective view illustrating a water valve for a washing machine and an integration apparatus for the water valve in an embodiment according to the present invention, FIG. 2 is a cross-sectional view illustrating an integration apparatus for a water valve for a washing machine in an embodiment according to the present invention, and FIG. 3 is a cross-sectional view illustrating installation of an integration apparatus for a water valve for a washing machine in an embodiment according to the present invention.

With reference to FIGs. 1 to 3, an integration apparatus for a water valve for a washing machine in an embodiment according to the present invention includes a depressurizing valve unit 100 and a filter unit 200.

The integration apparatus is installed in a water valve 10 disposed on a water supply path of a washing machine, specifically, in a valve head 11 at a water supply side of the water valve 10. The integration apparatus can perform a filtering function to filter foreign material in water supplied to the washing machine (hereinafter, referred to as "feed water") and a depressurizing function to reduce the hydraulic pressure of the filtered water to a preset hydraulic pressure while the depressurized feed water is fed into the washing machine.

The depressurizing valve unit 100 may be detachably installed to the valve head 11 of the water valve 10 such that the hydraulic pressure of the feed water fed into the washing machine is maintained at or less than the preset hydraulic pressure limit.

The hydraulic pressure of the feed water fed into the washing machine may be different in different locations (e.g., different homes), and so feed water fed into the washing machine through the depressurizing valve unit 100 will reduce hydraulic pressure to the preset limit or less, and thus prevent deterioration of the washing function and damage to the washing machine that might otherwise occur if feed water with hydraulic pressure higher than the preset hydraulic pressure limit is fed into the washing machine.

The depressurizing valve unit 100 may include a housing 110 and a valve unit 120.

On a side of the housing 110 on the water supply path through which the feed water flows, a plurality of through-holes 111 through which the feed water may flow are formed, and the rest of the housing 110 is closed. Thus, the feed water introduced into the housing 110 can pass through the through-holes 111.

Moreover, at the center of the housing 110, a support 112 protruding toward the direction of the incoming feed water may be formed. In an embodiment, the support 112 has a column shape and is installed in the valve unit 120. In such an embodiment, the through-holes 111 may be spaced apart from each other at equal distances around the support.

The valve unit 120 can be installed in the housing 110 such that the support 112 is inserted into the valve unit 120 to allow the valve unit 120 to move back-and-forth along the support 112. When the hydraulic pressure of the feed water is lower than a preset hydraulic pressure limit and the valve unit 120 is installed in the housing 110, the valve unit 120 moves away from the through-holes 111 to that it is spaced apart from the through-holes 111, so that feed water can pass through a gap between the valve unit 120 and the housing 110 and the through-holes 111 and then into the washing machine.

Moreover, when the hydraulic pressure of the feed water is higher than the preset hydraulic pressure limit, the valve unit 120 moves along the support 112 and closes the through-holes 111 so that the feed water does not pass through the through-holes 111. As a result, the hydraulic pressure of the feed water is controlled. In an embodiment, the valve unit 120 is made of a material like rubber to increase the closing force.

The filter unit 200 may be installed in front of the depressurizing valve unit 100 to filter foreign material in the feed water being fed into the depressurizing valve unit 100. Herein, the front side of the filter unit refers to the direction facing the incoming feed water; the side that the feed water reaches first may be called the front side and the side that the feed water reaches after that may be called the rear side. Thus, because the filter unit 200 is installed in front of the depressurizing valve unit 100, the feed water will first pass through the filter unit 200 and then into the depressurizing valve unit 100.

In an embodiment, the filter unit 200 is integrally molded with the depressurizing valve unit 100. The filter unit 200 may be integrally molded with the depressurizing valve unit 100 using a synthetic resin.

The filter unit 200, as illustrated in FIGs. 2 and 3, may be coupled to the depressurizing valve unit 100 by means of a coupling unit 300.

As described above, if the filter unit 200 and the depressurizing valve unit 100 are integrated with each other, manufacturing is easier and manufacturing costs may be reduced. However, in that case, if either the filter unit 200 or the depressurizing valve unit 100 malfunctioned, then both of them would have to be replaced.

On the other hand, if the depressurizing valve unit 100 and the filter unit 200 are separate parts that can be coupled with each other by means of the coupling unit 300, then the depressurizing valve unit 100 and the filter unit 200 can be readily attached to each other, reducing the risk that they may be lost and making installation more convenient, and only a malfunctioning part need be replaced by separating the malfunctioning part from the other part.

In an embodiment, the coupling unit 300 includes locking elements or steps 310 (e.g., a groove) and locking protrusions 320 (e.g., a latch or hook-like element) that fit into (snap into) the locking elements.

The locking elements 310 may be formed on either the depressurizing valve unit 100 or the filter unit 200. In an embodiment, the locking elements 310 are formed on the depressurizing valve 100, but as noted may instead be formed on the filter unit 200.

The locking protrusions 320 may be formed on either the depressurizing valve unit 100 or the filter unit 200 depending on which part the locking elements 310 are formed on. The locking protrusions 320 can be held by the locking elements 310 to provide a coupling force between the depressurizing valve unit 100 and the filter unit 200. In an embodiment, the locking protrusions 320 are formed on the filter unit 200, but as noted may instead be formed on the depressurizing valve unit 100.

In an embodiment, the filter unit 200 includes a flange unit 210 and a mesh unit 220.

The size (e.g., outer diameter) of the flange unit 210 may be less than or equal to an inner diameter of the valve head 11, such that the filter unit 200 can be mounted in the valve head 11. The size of the flange unit 210 may be specified such that the flange unit 210 is held in place by an end of the depressurizing valve unit 100.

The mesh unit 220 may protrude toward the front side, toward the incoming feed water as it flows into the flange unit 210. Thus, foreign material in the feed water may be filtered while the feed water passes through the mesh unit 220 before the feed water flows into the depressurizing valve unit 100, so that filtered feed water is fed into the depressurizing valve unit 100.

In an embodiment, at least two supports 230 that are spaced apart from each other in the circumferential direction on the outer circumference of the mesh unit 220 are formed and connected to the flange unit 210. The supports 230 reinforce the strength of the mesh unit 220 that protrudes from the flange unit 210, and provide support for the mesh unit 220 by connecting the side of the mesh unit 220 to the flange unit 210.

There may be more than two supports 230. In an embodiment, four supports 230 are arranged at intervals of 90 degrees; however, the number of the supports is not so limited.

In an embodiment, the mesh unit 220 is made of synthetic resin and, in such an embodiment, the mesh unit 220 is integrally formed with the flange unit 210.

In an embodiment where the mesh unit 220 is made of synthetic resin and integrally formed with the flange unit 210, the mesh unit 220 has elasticity, corrosion resistance so that corrosion from water may be prevented for a long time, and is not easily damaged by an external force.

The mesh unit 220 may be made of metal. In an embodiment where the mesh unit 220 is made of metal, the mesh unit 220 may be installed in the flange unit 210 by insert-molding into the flange unit 210.

In an embodiment where the mesh unit 220 is made of metal, the metal may be or may include iron, aluminum, or another metal, and will have excellent stiffness and strength.

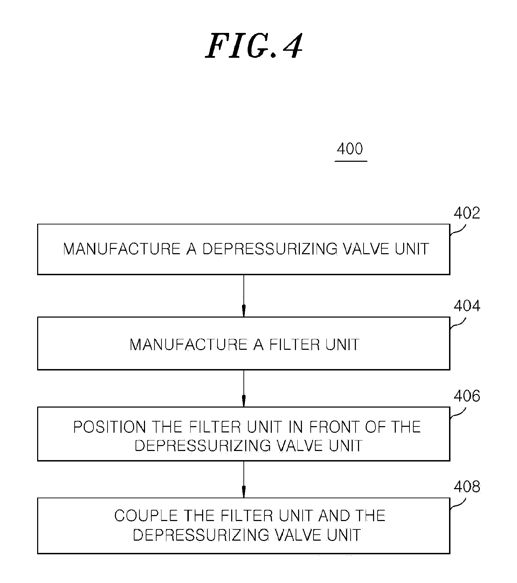

Hereinafter, with reference to FIG. 4, a method 400 of manufacturing an integration apparatus for a water valve for a washing machine in an embodiment according to the present invention will be described. Since the manufacturing method is supported by the above description of the integration apparatus for a water valve for a washing machine, duplicated description will be omitted and only features peculiar to this embodiment will be described.

A method of manufacturing an integration apparatus for a water valve for a washing machine in an embodiment according to the present invention, may include: manufacturing a depressurizing valve unit 100 that can maintain the hydraulic pressure of feed water fed into the water valve to a preset hydraulic pressure (402), manufacturing a filter unit 200 that can filter foreign material from the feed water (404), positioning the filter unit 200 in front of the depressurizing valve unit 100 (406), and coupling the depressurizing valve unit 100 with the filter unit 200 (408).

In an embodiment, the depressurizing valve unit 100 is manufactured by forming a housing 110, forming a valve unit 120, and installing the valve unit 120 around a support 112 of the housing 110.

The housing 110 has one or more through-holes 111 through which feed water can flow, and a support 112 protruding from its center.

The valve unit 120 may be made of rubber to close the through-holes 111 as necessary (e.g., if the hydraulic pressure exceeds the pressure limit).

The filter unit 200 may be manufactured by integrally molding the flange unit 210 in the water valve 10, and it can be held in place by an end of the depressurizing valve unit 100 with the mesh unit 220 protruding toward the front side of the flange unit 210 (toward the direction of the incoming feed water).

The method may further include forming at least two supports 230 on the outer circumference of the mesh unit 220 at a distance from one another (measured in the circumferential direction) and connected to the flange unit 210.

While the description of the present invention has been made with reference to example embodiments, various changes and modifications may be made without departing from the scope of the invention. The present invention is not limited to those embodiments. Therefore, the scope of the present invention should be defined by the appended claims rather than by the foregoing embodiments.

## Claims

1. An apparatus for a water valve for a washing machine, the apparatus comprising:
a depressurizing valve unit installed in a valve head of the water valve and operable for maintaining hydraulic pressure of feed water to the water valve to not more than a preset hydraulic pressure limit; and
a filter unit disposed in front of the depressurizing valve unit toward the direction of incoming feed water.

2. The apparatus according to claim 1, wherein the filter unit is integrated with the depressurizing valve unit.

3. The apparatus according to claim 1, wherein the filter unit is separate from the depressurizing valve unit and coupled to the depressurizing valve unit by a coupling unit.

4. The apparatus according to claim 3, wherein the coupling unit comprises:
a locking element on one of the depressurizing valve unit and the filter unit; and
a locking protrusion on the other of the depressurizing valve unit and the filter unit and held in place by the locking element to provide a coupling force between the locking element and the locking protrusion.

5. The apparatus according to claim 1, wherein the filter unit comprises:
a flange unit inserted into the valve head and held in place by an end of the depressurizing valve unit; and
a mesh unit protruding toward the incoming feed water.

6. The apparatus according to claim 5, further comprising at least two supports spaced apart from each other on the outer circumference of the mesh unit and connected to the flange unit.

7. The apparatus according to claim 5, wherein the mesh unit is made of synthetic resin and integrated with the flange unit.

8. The apparatus according to claim 5, wherein the mesh unit is made of metal and insert-molded into the flange unit.

9. A washing machine comprising the apparatus of claim 1.

10. A method of manufacturing an integration apparatus for a water valve for a washing machine, the method comprising:
manufacturing a depressurizing valve unit that is operable for maintaining a hydraulic pressure of feed water to the water valve to not more than a preset hydraulic pressure limit;
manufacturing a filter unit that is operable for filtering foreign material in the feed water; and
positioning the filter unit in front of the depressurizing valve unit toward the incoming feed water flow, and coupling the depressurizing valve unit and the filter unit to each other.

11. The method according to claim 10, wherein said manufacturing a depressurizing valve unit comprises:
forming a housing in which a plurality of through-holes is formed through which the feed water flows, the housing comprising a support protruding from the center of the housing;
forming a valve unit operable for closing the through-holes if the preset hydraulic pressure limit is exceeded; and
installing the valve unit around the support of the housing.

12. The method according to claim 10, wherein said manufacturing a filter unit comprises:
integrally molding a flange unit with dimensions that allow the flange unit to be inserted into the water valve and held in place by an end of the depressurizing valve unit with the mesh unit protruding toward the front side of the flange unit toward the direction of the incoming feed water flow.

13. The method according to claim 12, further comprising forming at least two supports on the outer circumference of the mesh unit and connected to the flange unit.
